# EUROPÄISCHE PATENTSCHRIFT

(11) **EP 3 810 487 B1**
(45) Veröffentlichungstag und Bekanntmachung des Hinweises auf die Patenterteilung: **02.08.2023**
(21) Anmeldenummer: 19733997.1
(22) Anmeldetag: 18.06.2019
(51) Int. Cl.: B62D 5/04, B62D 15/02

(54) **STEER-BY-WIRE ARCHITEKTUREN MIT ZWEITEM LENKWINKELSENSOR**
STEER-BY-WIRE ARCHITECTURES HAVING A SECOND STEERING ANGLE SENSOR
ARCHITECTURES DE COMMANDE PAR FILS AVEC DEUXIEME CAPTEUR D'ANGLE DE BRAQUAGE

(30) Priorität: 21.06.2018 DE 102018114988
(43) Veröffentlichungstag der Anmeldung: 28.04.2021
(73) Patentinhaber: thyssenkrupp Presta AG, 9492 Eschen (LI); thyssenkrupp AG, 45143 Essen (DE)
(72) Erfinder: HAMORI, Botond, 1026 Budapest (HU); GAAL, Zoltan, 1113 Budapest (HU); KAKAS, Peter, 1118 Budapest (HU)
(74) Vertreter: thyssenkrupp Intellectual Property GmbH
(86) Internationale Anmeldenummer: PCT/EP2019/065956
(87) Internationale Veröffentlichungsnummer: WO 2019/243300

(56) Entgegenhaltungen:
- WO-A1-2005/047080
- DE-A1- 10 042 308
- DE-A1- 10 053 335
- DE-A1- 10 157 666
- DE-A1- 19 833 460
- DE-A1-102013 006 378
- US-A1- 2002 084 757
- US-A1- 2006 042 858

## Beschreibung

Die vorliegende Erfindung betrifft ein Steer-by-Wire-Lenksystem für Kraftfahrzeuge mit den Merkmalen des Oberbegriffs des Anspruchs 1.

In Steer-by-Wire-Lenksystemen ist die Stellung der gelenkten Räder nicht direkt mit dem Lenkrad gekoppelt. Es besteht eine Verbindung zwischen dem Lenkrad und den gelenkten Rädern über elektrische Signale. An Stelle der mechanischen Kopplung werden ein Lenksteller zur Positionierung der Räder sowie ein Feedback-Aktuator zur Simulation der Rückstellkräfte am Lenkrad verwendet. Um die Sicherheitsanforderungen zu erfüllen, muss das Lenksystem so ausgebildet sein, dass die Funktionalität stets gegeben ist. Hauptsächlich wegen der entstehenden Kosten muss hier ein geeigneter Kompromiss zwischen dem Grad der Fehlertoleranz und der Zahl der redundanten Komponenten gefunden werden. US 2006/042858, sowie US 2019/009813 offenbart den Oberbegriff des Anspruchs 1.

Es ist Aufgabe der vorliegenden Erfindung, ein Steer-by-Wire-Lenksystem für Kraftfahrzeuge anzugeben, das kostengünstig ist und stets zuverlässig arbeitet, um die Sicherheitsziele zu erfüllen.

Diese Aufgabe wird von einem Steer-by-Wire-Lenksystem mit den Merkmalen des Anspruchs 1 gelöst. In den Unteransprüchen sind vorteilhafte Weiterbildungen der Erfindung genannt.

Demnach ist ein Steer-by-Wire-Lenksystem für Kraftfahrzeuge aufweisend einen auf die gelenkten Räder wirkenden, in Abhängigkeit eines Fahrerlenkwunsches elektronisch geregelten Lenksteller, und einen Rückwirkungen der Straße auf ein Steuer übertragenden Feedback-Aktuator aufweisend einen ersten Lenkwinkelsensor, vorgesehen, wobei der Lenksteller eine redundante Stromversorgung aufweist und mit einer ersten Stromversorgung und einer zweiten Stromversorgung verbunden ist, wobei der Feedback-Aktuator mit der ersten Stromversorgung verbunden ist und das Steer-by-Wire-Lenksystem einen zweiten, vom Feedback-Aktuator unabhängigen Lenkwinkelsensor umfasst, der mit der zweiten Stromversorgung verbunden ist.

Durch den zweiten externen Lenkwinkelsensor besteht die Möglichkeit einen für eine elektromechanische Kraftfahrzeuglenkung zur Positionierung am Lenkstrang vorgesehenen Aktuator (Column EPS) als Feedback-Aktuator in einer Steer-by-Wire-Lenkung kostengünstig einzusetzen und trotzdem die benötigten Sicherheitsziele einer Steer-by-Wire-Lenkung zu erreichen. Der Feedback-Aktuator ist vorzugsweise ausschließlich mit der ersten Stromversorgung verbunden.

Bevorzugt sind die beiden Stromversorgungen derart ausgebildet, dass bei einem Ausfall einer der beiden Stromversorgungen die jeweils andere Stromversorgung dafür sorgt, dass der Lenksteller weiter betrieben werden kann. Es ist vorteilhaft, wenn das Steer-by-Wire-Lenksystem einen privaten Kommunikationskanal umfasst, über den der Feedback-Aktuator mit dem Lenksteller kommuniziert. In einer Ausführungsform ist vorgesehen, dass das Steer-by-Wire-Lenksystem einen einzelnen Kraftfahrzeugkommunikationskanal umfasst, über den der Feedback-Aktuator sowohl mit dem Kraftfahrzeug als auch mit dem Lenksteller kommuniziert. Bei Ausfall einer der Kommunikationskanäle (privater Kommunikationskanal, Kraftfahrzeugkommunikationskanal) kann der jeweils andere, fehlerfreie Kanal die notwendige Kommunikation zwischen dem Feedback-Aktuator und dem Lenksteller übernehmen. Die Kommunikation ist somit redundant ausgebildet. Dabei ist es bevorzugt vorgesehen, dass das Steer-by-Wire-Lenksystem einen direkten Kommunikationskanal zwischen dem zweiten Lenkwinkelsensor und dem Lenksteller umfasst, über den der zweite Lenkwinkelsensor den gemessenen Lenkwinkel an den Lenksteller übertragen kann. Bei einem Ausfall des Feedback-Aktuators greift das System auf den zweiten Lenkwinkelsensor zu, der unabhängig von dem Feedback-Aktuator mit dem Lenksteller kommuniziert und somit eine ordnungsgemäße Funktion des Lenksystems ermöglicht.

In einer zweiten Ausführungsform kann das Steer-by-Wire-Lenksystem einen einzelnen Kraftfahrzeugkommunikationskanal umfassen, über den der Lenksteller sowohl mit dem Kraftfahrzeug als auch mit dem zweiten Lenkwinkelsensor kommuniziert. Eine Kommunikation über den Kraftfahrzeugkommunikationskanal mit dem Feedback-Aktuator findet nicht statt. Bei einem Ausfall des Feedback-Aktuators greift das System auf den zweiten Lenkwinkelsensor zu, der unabhängig von dem Feedback-Aktuator mit dem Lenksteller über den Kraftfahrzeugkommunikationskanal kommuniziert und somit eine ordnungsgemäße Funktion des Lenksystems ermöglicht.

Wie bereits erläutert, ist der Feedback-Aktuator bevorzugt durch einen Aktuator für ein elektromechanisches Lenksystem gebildet. Bestehende Bauteile einer elektromechanischen Lenkung können so in das Steer-by-Wire-System eingebaut werden, wodurch Kosten eingespart werden können.

Vorzugsweise ist der zweite Lenkwinkelsensor außen an dem Feedback-Aktuator angebracht.

Bevorzugte Ausführungsformen der Erfindung werden nachfolgend anhand der Zeichnungen näher erläutert. Gleichartige oder gleichwirkende Bauteile werden in den Figuren mit denselben Bezugszeichen bezeichnet. Es zeigen:
- Fig. 1:: eine schematische Darstellung eines Steer-by-Wire-Lenksystems,
- Fig. 2:: ein Blockdiagramm einer Architektur des Steer-by-Wire-Lenksystems, sowie
- Fig. 3:: ein Blockdiagramm einer zweiten Architektur des Steer-by-Wire-Lenksystems.

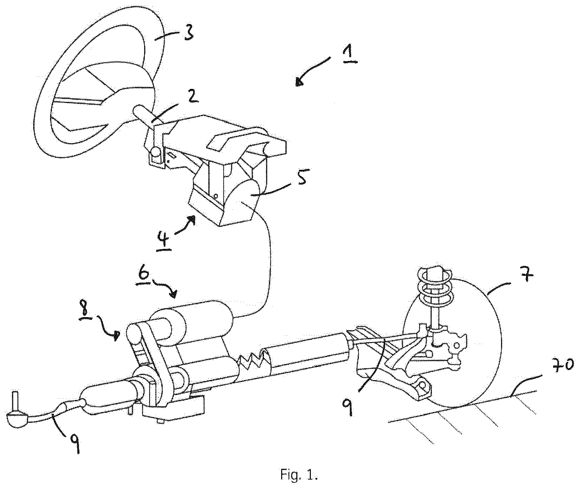

In der Figur 1 ist eine Steer-by-Wire-Lenkung 1 gezeigt. An einer Lenkwelle 2 ist ein nicht dargestellter Drehwinkelsensor angebracht, welcher das durch Drehen des Lenkrads 3 aufgebrachte Fahrerlenkmoment erfasst. Des Weiteren ist an der Lenkwelle 2 ein Feedback-Aktuator 4 angebracht, welcher dazu dient, die Rückwirkungen von der Fahrbahn 70 auf das Lenkrad 3 zu übertragen und somit dem Fahrer eine Rückmeldung über das Lenk- und Fahrverhalten des Fahrzeugs zu geben. Der Fahrerlenkwunsch wird über den vom Lenkwinkelsensor gemessenen Drehwinkel der Lenkwelle 2 über Signalleitungen an eine Steuereinheit 5 übertragen. Die Steuereinheit 5 steuert in Abhängigkeit des Signals vom Drehwinkelsensor sowie weiteren Eingangsgrößen, wie z. B. Fahrzeuggeschwindigkeit, Gierrate und dergleichen einen elektrischen Lenksteller 6, auch Lenkungsaktuator genannt, an, welcher die Stellung der gelenkten Räder 7 steuert. Der Lenksteller 6 bewirkt mittels eines Gewindetriebes 8 eine axiale Verlagerung einer Zahnstange. Die gelenkten Räder 7 sind über Spurstangen 9 mit der Zahnstange verbundenen.

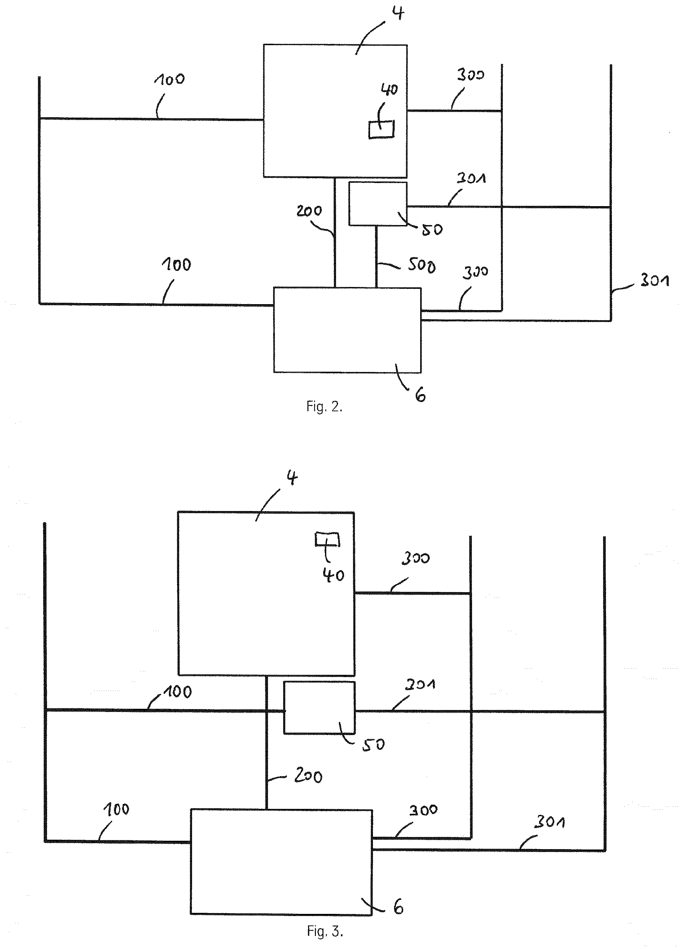

Figur 2 zeigt eine erste Ausführungsform einer Verkabelungsarchitektur für ein Steer-by-Wire-Lenksystem. Der Feedback-Aktuator 4 und der Lenksteller 6 kommunizieren über einen gemeinsamen Kraftfahrzeugkommunikationskanal 100 mit dem Kraftfahrzeug und untereinander. Der Feedback-Aktuator 4 kommuniziert auf einem privaten Kommunikationskanal 200 mit dem Lenksteller 6. Bei einem Ausfall einer der beiden Kommunikationskanäle (Kraftfahrzeugkommunikationskanal 100, privater Kommunikationskanal 200) funktioniert das Lenksystem weiter ordnungsgemäß, da alle benötigten Signale über beide Kanäle 100,200 übertragen werden.

Es ist eine redundante Stromversorgung für den Lenksteller 6 vorgesehen. Der Feedback-Aktuator 4 und der Lenksteller 6 sind jeweils mit einer ersten Stromversorgung 300 verbunden. Der Lenksteller ist zudem mit einer zweiten Stromversorgung 301 verbunden. Bei einem Ausfall einer der beiden Stromversorgungen 300,301 oder einem anderen elektronischen Fehlerfall (z. B. Kurzschluss, Softwarefehler) gewährleistest die andere, fehlerfreie Stromversorgung 300,301, das der Lenksteller 6 weiter betrieben werden kann. Der Feedback-Aktuator 4 weist einen integrierten Lenkwinkelsensor 40 (engl. steering wheel angle (SAS) sensor) auf, der über die Stromversorgung des Feedback-Aktuators mit Strom versorgt wird. An die zweite Stromversorgung 301 ist ein zusätzlicher zweiter Lenkwinkelsensor 50 angeschlossen, der extern an dem Feedback-Aktuator 4 angebracht ist. Fällt die erste Stromversorgung 300 und somit der Feedback-Aktuator 4 mit dem integrierten Lenkwinkelsensor 40 aus, übernimmt der zweite, unabhängige Lenkwinkelsensor 50 die Messung der Drehlage der Lenkwelle und somit des Fahrerlenkwunsches. Der zweite Lenkwinkelsensor 50 weist eine direkte Verbindung 500 zu dem Lenksteller 6 auf, um den gemessenen Drehwinkel zur Steuerung der Steer-by-Wire Lenkung an den Lenksteller 6 weiterzugeben zu können.

Figur 3 zeigt eine zweite Ausführungsform einer Verkabelungsarchitektur für eine Steer-by-Wire-Lenkung. Auch hier ist der Lenksteller 6 ein redundantes Fail-Operational-System, d. h. beim Vorliegen von Fehlern im System kann ein definiertes Maß an Betriebsfähigkeit aufrechterhalten werden. Der Lenksteller 6 kommuniziert über einen Kraftfahrzeugkommunikationskanal 100 mit dem Kraftfahrzeug. Der Feedback-Aktuator 4 kommuniziert auf einem privaten Kommunikationskanal 200 mit dem Lenksteller 6. Bei einem Ausfall einer der beiden Kommunikationskanäle (Kraftfahrzeugkommunikationskanal 100, privater Kommunikationskanal 200) funktioniert das Lenksystem weiter ordnungsgemäß, da alle benötigten Signale über beide Kanäle übertragen werden.

Es ist eine redundante Stromversorgung für den Lenksteller 6 vorgesehen. Der Feedback-Aktuator 4 und der Lenksteller 6 sind jeweils mit einer ersten Stromversorgung 300 verbunden. Der Lenksteller ist zudem mit einer zweiten Stromversorgung 301 verbunden. Bei einem Ausfall einer der beiden Stromversorgungen 300,301 gewährleistet die andere, fehlerfreie Stromversorgung 300,301, dass der Lenksteller 6 weiter betrieben werden kann. Der Feedback-Aktuator 4 weist einen integrierten Lenkwinkelsensor 40 (engl. steering wheel angle (SAS) sensor) auf. An die zweite Stromversorgung 301 ist ein zusätzlicher zweiter Lenkwinkelsensor 50 angeschlossen, der extern an dem Feedback-Aktuator 4 angebracht ist. Fällt die erste Stromversorgung 300 und somit der Feedback-Aktuator aus, übernimmt der zweite, unabhängige Lenkwinkelsensor 50 die Messung der Drehlage der Lenkwelle und somit des Fahrerlenkwunsches. Der zweite Lenkwinkelsensor 50 ist für diesen Fall über dem Kraftfahrzeugkommunikationskanal 100 mit dem Lenksteller 6 verbunden.

In beiden Ausführungsformen ist der Feedback-Aktuator bevorzugt durch einen Aktuator einer elektromechanischen Lenkung gebildet, insbesondere durch einen Aktuator, der zur Hilfskraftunterstützung am Lenkstrang (engl. Column EPS) vorgesehen ist.

## Patentansprüche

1. Steer-by-Wire-Lenksystem (1) für Kraftfahrzeuge aufweisend einen auf die gelenkten Räder (7) wirkenden, in Abhängigkeit eines Fahrerlenkwunsches elektronisch geregelten Lenksteller (6), und einen Rückwirkungen der Straße (70) auf ein Steuer übertragenden Feedback-Aktuator (4) aufweisend einen ersten Lenkwinkelsensor (40), wobei der Lenksteller (6) eine redundante Stromversorgung (300,301) aufweist und mit einer ersten Stromversorgung (300) und einer zweiten Stromversorgung (301) verbunden ist, wobei der Feedback-Aktuator (4) mit der ersten Stromversorgung (300) verbunden ist, **dadurch gekennzeichnet, dass** das Steer-by-Wire-Lenksystem einen zweiten, vom Feedback-Aktuator (4) unabhängigen Lenkwinkelsensor (50) umfasst, der mit der zweiten Stromversorgung (301) verbunden ist.

2. Steer-by-Wire-Lenksystem nach Anspruch 1, **dadurch gekennzeichnet, dass** die beiden Stromversorgungen (300,201) derart ausgebildet sind, dass bei einem Ausfall einer der beiden Stromversorgungen (300,301) die jeweils andere Stromversorgung (300,301) dafür sorgt, dass der Lenksteller (6) weiter betrieben werden kann.

3. Steer-by-Wire-Lenksystem nach Anspruch 1 oder 2, **dadurch gekennzeichnet, dass** das Steer-by-Wire-Lenksystem einen privaten Kommunikationskanal (200) umfasst, über den der Feedback-Aktuator (4) mit dem Lenksteller (6) kommuniziert.

4. Steer-by-Wire-Lenksystem nach einem der vorhergehenden Ansprüche 1 bis 3, **dadurch gekennzeichnet, dass** das Steer-by-Wire-Lenksystem einen einzelnen Kraftfahrzeugkommunikationskanal (100) umfasst, über den der Feedback-Aktuator (4) sowohl mit dem Kraftfahrzeug als auch mit dem Lenksteller (6) kommuniziert.

5. Steer-by-Wire-Lenksystem nach Anspruch 4, **dadurch gekennzeichnet, dass** das Steer-by-Wire-Lenksystem einen direkten Kommunikationskanal (500) zwischen dem zweiten Lenkwinkelsensor (50) und dem Lenksteller (6) umfasst, über den der zweite Lenkwinkelsensor (50) den gemessenen Lenkwinkel an den Lenksteller (6) übertragen kann.

6. Steer-by-Wire-Lenksystem nach einem der Ansprüche 1 bis 3, **dadurch gekennzeichnet, dass** das Steer-by-Wire-Lenksystem einen einzelnen Kraftfahrzeugkommunikationskanal (100) umfasst, über den der Lenksteller (6) sowohl mit dem Kraftfahrzeug als auch mit dem zweiten Lenkwinkelsensor (50) kommuniziert.

7. Steer-by-Wire-Lenksystem nach einem der vorhergehenden Ansprüche, **dadurch gekennzeichnet, dass** der Feedback-Aktuator (4) durch einen Aktuator für ein elektromechanisches Lenksystem gebildet ist.

8. Steer-by-Wire-Lenksystem nach einem der vorhergehenden Ansprüche, **dadurch gekennzeichnet, dass** der zweite Lenkwinkelsensor (50) extern an dem Feedback-Aktuator (4) angebracht ist.

## Claims

1. A steer-by-wire steering system (1) for motor vehicles, comprising a steering actuator (6) electronically controlled depending on a driver's steering command and acting on the steered wheels (7), and a feedback actuator (4) transmitting feedback from the road (70) to a steering wheel and comprising a first steering angle sensor (40), wherein the steering actuator (6) comprises a redundant power supply (300, 301) and is connected to a first power supply (300) and a second power supply (301), wherein the feedback actuator (4) is connected to the first power supply (300), **characterized in that** the steer-by-wire steering system comprises a second steering angle sensor (50), which is independent of the feedback actuator (4) and is connected to the second power supply (301).

2. The steer-by-wire steering system as claimed in claim 1, **characterized in that** the two power supplies (300, 201) are designed in such a way that, in the event of a failure of one of the two power supplies (300, 301), the particular other power supply (300, 301) ensures that the steering actuator (6) can continue to be operated.

3. The steer-by-wire steering system as claimed in claim 1 or 2, **characterized in that** the steer-by-wire steering system comprises a private communication channel (200), via which the feedback actuator (4) communicates with the steering actuator (6).

4. The steer-by-wire steering system as claimed in one of the preceding claims 1 through 3, **characterized in that** the steer-by-wire steering system comprises a single motor vehicle communication channel (100), via which the feedback actuator (4) communicates with the motor vehicle as well as with the steering actuator (6).

5. The steer-by-wire steering system as claimed in claim 4, **characterized in that** the steer-by-wire steering system comprises a direct communication channel (500) between the second steering angle sensor (50) and the steering actuator (6), via which the second steering angle sensor (50) can transmit the measured steering angle to the steering actuator (6).

6. The steer-by-wire steering system as claimed in one of the claims 1 through 3, **characterized in that** the steer-by-wire steering system comprises a single motor vehicle communication channel (100), via which the steering actuator (6) communicates with the motor vehicle as well as with the second steering angle sensor (50).

7. The steer-by-wire steering system as claimed in one of the preceding claims, **characterized in that** the feedback actuator (4) is formed by an actuator for an electromechanical steering system.

8. The steer-by-wire steering system as claimed in one of the preceding claims, **characterized in that** the second steering angle sensor (50) is mounted externally at the feedback actuator (4).

## Revendications

1. Système de direction à commande électrique (1) pour véhicules automobiles, comprenant un actionneur de direction (6) commandé électroniquement en fonction de la commande de direction du conducteur et agissant sur les roues directrices (7), et un actionneur de rétroaction (4) transmettant la rétroaction de la route (70) à un volant et comprenant un premier capteur d'angle de braquage (40), dans lequel l'actionneur de direction (6) comprend une alimentation électrique redondante (300, 301) et est connecté à une première alimentation électrique (300) et à une deuxième alimentation électrique (301), l'actionneur de rétroaction (4) étant connecté à la première alimentation électrique (300), **caractérisé en ce que** le système de direction par câble comprend un deuxième capteur d'angle de braquage (50), qui est indépendant de l'actionneur de rétroaction (4) et est connecté à la deuxième alimentation électrique (301).

2. Le système de direction à commande électrique selon la revendication 1, **caractérisé en ce que** les deux alimentations électriques (300, 201) sont conçues de telle sorte que, en cas de défaillance de l'une des deux alimentations électriques (300, 301), l'autre alimentation électrique particulière (300, 301) garantit que l'actionneur de direction (6) peut continuer à être actionné.

3. Le système de direction à commande électrique selon la revendication 1 ou 2, **caractérisé en ce que** le système de direction à commande électrique comprend un canal de communication privé (200), par lequel l'actionneur de rétroaction (4) communique avec l'actionneur de direction (6).

4. Système de direction à commande électrique selon l'une des revendications précédentes 1 à 3, **caractérisé en ce que** le système de direction à commande électrique comprend un seul canal de communication avec le véhicule à moteur (100), par lequel l'actionneur de rétroaction (4) communique avec le véhicule à moteur ainsi qu'avec l'actionneur de direction (6).

5. Le système de direction à commande électrique selon la revendication 4, **caractérisé en ce que** le système de direction à commande électrique comprend un canal de communication directe (500) entre le deuxième capteur d'angle de braquage (50) et l'actionneur de direction (6), par lequel le deuxième capteur d'angle de braquage (50) peut transmettre l'angle de braquage mesuré à l'actionneur de direction (6).

6. Le système de direction à commande électrique selon l'une des revendications 1 à 3, **caractérisé en ce que** le système de direction à commande électrique comprend un seul canal de communication avec le véhicule à moteur (100), par lequel l'actionneur de direction (6) communique avec le véhicule à moteur ainsi qu'avec le second capteur d'angle de braquage (50).

7. Système de direction à commande électrique selon l'une des revendications précédentes, **caractérisé par le fait que** l'actionneur de rétroaction (4) est formé par un actionneur pour un système de direction électromécanique.

8. Le système de direction à commande électrique selon l'une des revendications précédentes, **caractérisé en ce que** le second capteur d'angle de braquage (50) est monté à l'extérieur de l'actionneur de rétroaction (4).
